# DEMANDE DE BREVET EUROPEEN

(11) **EP 2 930 417 A1**
(43) Date de publication de la demande: **14.10.2015**
(21) Numéro de dépôt: 15161206.6
(22) Date de dépôt: 17.06.2005
(51) Int. Cl.: F21V 8/00, F21S 8/10

(54) **DISPOSITIF D'ÉCLAIRAGE ET/OU DE SIGNALISATION À GUIDE OPTIQUE**

(30) Priorité: 24.06.2004 FR 0406945; 07.09.2004 FR 0409476
(62) Demande divisionnaire de: 05291310.0
(71) Demandeur: VALEO VISION, 93012 Bobigny Cedex (FR)
(72) Inventeur: Gasquet, Jean-Claude, 89100 SAINT CLEMENT (FR); Andrieu, Michel, 81660 BOUT DU PONT DE L'ARN (FR)

(57) **Abrégé**

L'invention concerne un dispositif d'éclairage et/ou de signalisation, pour véhicule automobile, comportant
- au moins un moteur de lumière (2), comprenant au moins une diode électroluminescente (3) émettant un faisceau lumineux en direction du moteur, notamment selon l'axe (X) dudit moteur et
- au moins un guide optique (G), dont une extrémité (e1) est éclairée par la ou au moins une des diode(s) électroluminescente(s), ce guide optique étant apte à émettre de la lumière, notamment sur tout ou partie de sa longueur,
- le guide optique comportant au moins un orifice non traversant (12, 13) réalisé dans l'épaisseur dudit guide optique et situé en regard du moteur de lumière (2), et déviant le faisceau lumineux, notamment par une réflexion latérale de celui-ci. Le guide optique comporte une gorge (9) réalisée dans l'épaisseur dudit guide optique, suivant la longueur du guide.

## Description

### Domaine de l'invention

L'invention concerne un dispositif d'éclairage et/ou de signalisation équipant un véhicule automobile et comportant au moins un moteur de lumière et un guide optique apte à propager la lumière axialement et/ou latéralement. L'invention concerne aussi un véhicule comportant un tel dispositif d'éclairage ou de signalisation.

L'invention trouve des applications dans le domaine des véhicules circulant sur route et, notamment, des véhicules automobiles. Elle trouve, en particulier, des applications dans le domaine de l'éclairage et de la signalisation de ces véhicules sur la route. Elle s'applique aussi au domaine de l'éclairage intérieur des véhicules.

### Etat de la technique

Dans le domaine de l'éclairage et de la signalisation des véhicules automobiles, on connaît différents types de dispositifs parmi lesquels on trouve essentiellement :
- des dispositifs d'éclairage situés à l'avant du véhicule avec, notamment, des projecteurs de véhicules équipés de feux de position ayant une intensité et une portée lumineuse faible, de feux de croisement, ou codes, ayant une intensité lumineuse plus forte et une portée sur la route avoisinant 110 mètres, et de feux de route ayant une longue portée lumineuse et produisant une zone de vision sur la route avoisinant 200 mètres,
- des dispositifs d'éclairage situés à l'arrière du véhicule avec, notamment, les feux de recul,
- des dispositifs de signalisation situés à l'avant (ou sur le coté) du véhicule avec, notamment, des indicateurs de direction, les rappels de clignotant des D.R.L. (Daytime Running Light, en termes anglo-saxons) ou phares de jour, et
- des dispositifs de signalisation situés à l'arrière du véhicule avec, notamment, des feux antibrouillards, des feux arrière, des indicateurs de direction et des feux stop.
- les dispositifs d'éclairage intérieur avec notamment les plafonniers principaux (Avant, Central ou Arrière)
- les éclairages participant au style (lignes de style éclairées sur tableau de bord, habillage de portières ou éclairage du pavillon de toit)

Actuellement, il est connu d'utiliser, dans les dispositifs d'éclairage et/ou les dispositifs de signalisation, un ou plusieurs guides optiques pour propager un faisceau lumineux.

On connaît par exemple du document DE-A-101 53 543 un dispositif d'éclairage pour véhicule automobile comportant un guide de lumière muni d'éléments optiques de déflexion sur l'un de ses côtés, pour diriger la lumière qui se propage dans le guide vers l'autre de ses côtés, au moins un point d'entrée de lumière du côté muni d'éléments de déflexion, et au moins une paroi réflectrice pour réfléchir la lumière incidente sur les éléments de déflexion. Le guide de lumière comporte un orifice d'axe transversal à l'axe du guide et transversal à la direction de la lumière incidente. La paroi réflectrice est formée par une paroi de cet orifice.

Un autre exemple d'un tel dispositif d'éclairage est décrit dans le document EP-A-0 515 921. Ce dispositif est prévu pour assurer un éclairage à l'intérieur d'un véhicule en étant incorporé dans une poignée de porte. L'intensité lumineuse suivant une direction orthogonale à la longueur du guide optique ne présente pas de zone privilégiée et demeure relativement faible.

Or, il est souhaitable qu'un dispositif de signalisation ou d'éclairage, généralement orienté vers l'extérieur d'un véhicule, permette de bien attirer l'attention des autres conducteurs et des piétons.

En outre, il est intéressant, pour un constructeur automobile, d'utiliser une signalisation ou un éclairage particulier pour donner, par son aspect visuel, un style particulier à ses véhicules. Il est par exemple intéressant de pour voir fournir un éclairage d'ambiance permettant de souligner des lignes de style et (ou) de se positionner à l'intérieur du véhicule.

### Exposé de l'invention

L'invention a justement pour but de remédier aux inconvénients des techniques évoquées précédemment. A cette fin, l'invention propose un dispositif d'éclairage ou de signalisation dans lequel la lumière émise par la source lumineuse peut être propagée par le guide optique, d'une part, axialement pour créer une zone à forte intensité lumineuse et, d'autre part, latéralement pour créer une zone de moindre intensité lumineuse sur une plus grande longueur. La lumière peut aussi n'être propagée que latéralement, notamment pour créer des éclairages de grande longueur. Pour cela, le dispositif de l'invention comporte au moins un guide optique et au moins une source lumineuse, placée à proximité du guide optique. Le guide optique comporte, dans son épaisseur, au moins un orifice non traversant situé en regard de la source lumineuse et assurant une répartition des rayons lumineux axialement et/ou latéralement.

De façon plus précise, l'invention concerne un dispositif d'éclairage et/ou de signalisation, pour véhicule automobile, comportant
- au moins un moteur de lumière, comprenant au moins une diode électroluminescente émettant un faisceau lumineux en direction du moteur, notamment selon l'axe dudit moteur et
- au moins un guide optique, dont une extrémité est éclairée par la ou au moins une des diode(s) électroluminescente(s), ce guide optique étant apte à émettre de la lumière, notamment sur tout ou partie de sa longueur,
- le guide optique comportant au moins un orifice non traversant réalisé dans l'épaisseur dudit guide optique et situé en regard du moteur de lumière, et déviant le faisceau lumineux, notamment par une réflexion latérale de celui-ci.

Le guide optique a donc une extrémité qui reçoit le faisceau lumineux émis par la ou au moins une des diode électroluminescentes,

Un tel guide optique assure une répartition des rayons lumineux axialement ou latéralement, ou seulement latéralement, particulièrement dans le cas ou il est recherché un éclairage homogène sur une grande longueur (par exemple éclairage tableau de bord, pavillon de toit, habillage de portière).

L'invention peut comporter une ou plusieurs des caractéristiques suivantes :
- le guide optique comporte deux orifices non traversants.
- le guide optique comporte une gorge réalisée dans l'épaisseur dudit guide, suivant la longueur du guide optique. Une telle gorge assure une diffusion des rayons lumineux vers la face de sortie du guide.
- la gorge comporte une zone diffusante située au fond de la gorge du guide optique. Cette zone diffusante permet d'accentuer l'effet de diffusion de la gorge.
- la zone diffusante est proche du centre de la section du guide optique.
- la zone diffusante est munie de micro-diffusions dont la dimension est de l'ordre du dixième de millimètres.
- les micro-diffusions peuvent être des micro-prismes, des rugosités, des micro-fresnel ou des dépolis, etc.
- la gorge du guide optique a une forme évolutive.
- le moteur de lumière est placé dans une position centrale, entre au moins deux parties du guide optique. De cette façon, les rayons lumineux peuvent être émis dans les deux parties du guide optique.

L'invention concerne également un véhicule automobile équipé d'au moins d'un tel dispositif d'éclairage et/ou de signalisation.

### Brève description des dessins

La figure 1 représente une vue partiellement en coupe d'un premier mode de réalisation du dispositif selon l'invention.
La figure 2 représente une vue partiellement en coupe d'un deuxième mode de réalisation du dispositif selon l'invention.
La figure 3 représente une vue d'une section du guide optique selon l'invention.
La figure 4 représente une vue en perspective d'un exemple de gorge évolutive.
La figure 5 représente un exemple d'évolution de la lumière dans le guide optique des figures 1 et 2.
La figure 6 représente un exemple de dispositif de signalisation avec points chauds et zones linéaires.

### Description détaillée de modes de réalisation de l'invention

L'invention concerne un dispositif d'éclairage ou de signalisation de type feux pour véhicule automobile permettant une diffusion axiale et/ou latérale de la lumière. Ce dispositif comporte au moins un moteur de lumière émettant un faisceau lumineux et au moins un guide optique destiné à propager et émettre sur sa longueur ce faisceau lumineux.

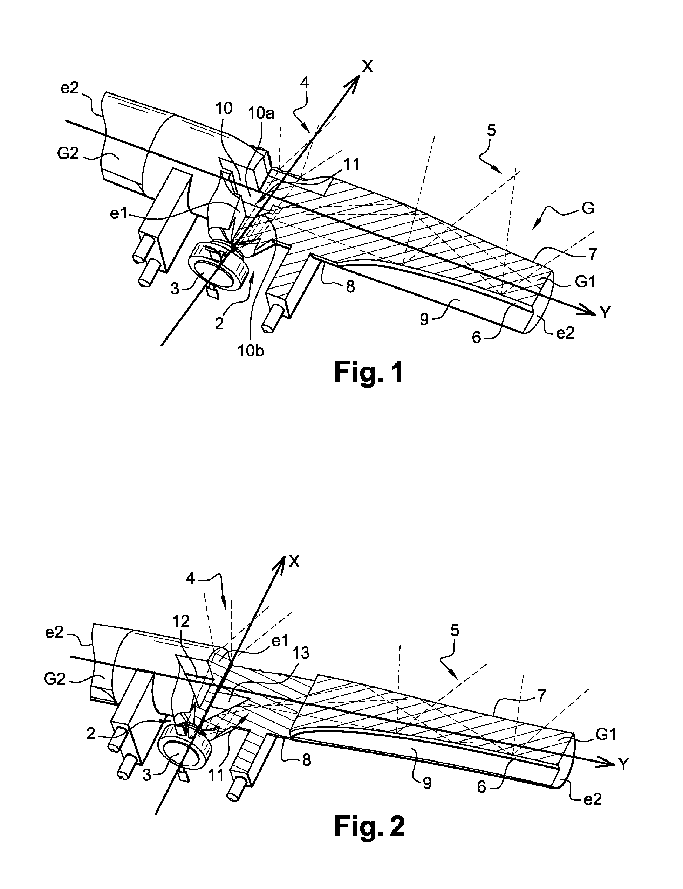

Un premier mode de réalisation du dispositif d'éclairage ou de signalisation de l'invention est représenté sur la figure 1. Cette figure 1 montre une vue partiellement en coupe d'un guide optique et d'un moteur de lumière selon l'invention.

Le guide optique est un élément plein allongé, par exemple ayant une section cylindrique, de matière transparente qui assure la propagation du faisceau lumineux émis par la source lumineuse depuis une extrémité proche de la source lumineuse jusqu'à une extrémité opposée. La section du guide peut être différente, par exemple ovale voire polygonale du type carré, ou encore à base avec des prismes ou reliefs locaux. Ce guide optique peut avoir différentes formes géométriques. Il peut, par exemple, avoir la forme d'un cercle, d'un arc de cercle ou bien être rectiligne ou comporter des zones courbes et des zones rectilignes. Dans le mode de réalisation représenté sur la figure 1, le guide optique est de type rectiligne à section cylindrique. Un tel guide optique rectiligne peut être utilisé, par exemple, dans la réalisation d'un feu stop surélevé, c'est-à-dire du troisième feu stop situé en regard de la vitre arrière d'un véhicule et désigné par CHMLS (Central High Mounted Lamp Stop, en termes anglo-saxons).

Dans le mode de réalisation de la figure 1, le guide optique G comporte une première partie de guide G1 et une seconde partie de guide G2. Chaque partie de guide G1 et G2 a une première extrémité e1, commune aux deux parties, et une seconde extrémité e2, opposée à l'extrémité e1. Le guide optique G reçoit le faisceau lumineux émis par le moteur de lumière 2, au voisinage de l'extrémité e1. Autrement dit, le moteur de lumière 2 qui émet le faisceau lumineux est placé à proximité de la zone centrale du guide optique G, c'est-à-dire à proximité de l'extrémité e1.

Le moteur de lumière 2 émet un faisceau de lumière traitée. Pour cela, le moteur de lumière 2 comporte une diode électroluminescente 3, ou LED, de forte puissance et un système optique pour traiter la lumière. De préférence, la diode électroluminescente 3 est une diode hémisphérique, de type lambertien, c'est-à-dire qu'elle comporte une zone émettrice en forme de cône, par exemple de 120°. Une telle diode a l'avantage d'émettre un faisceau lumineux suivant plusieurs directions. Ce faisceau lumineux est ensuite transformé par le système optique en sessions parallèles.

Le système optique peut comporter un réflecteur dont le rôle est de modifier la répartition du flux lumineux de la diode électroluminescente. Il peut comporter une lentille de Fresnel déviant la lumière de façon à produire une distribution uniforme de la lumière. Le moteur de lumière 2 assure donc l'émission de la lumière et sa transformation en faisceaux parallèles, prêts à être redistribués dans le guide optique G.

Ainsi, le faisceau lumineux est émis par le moteur de lumière 2, dans le guide optique G, suivant une direction principale d'émission, ou direction axiale, c'est-à-dire suivant l'axe X du moteur de lumière 2. En d'autres termes, les rayons émis par la LED 3 sont transformés par le système optique en rayons lumineux parallèles. Les rayons lumineux entrent donc, par l'extrémité e1, dans le guide optique G, parallèlement ou substantiellement parallèlement à l'axe X.

Certains des rayons de ce faisceau lumineux traversent le guide axialement : ce sont les rayons lumineux axiaux 4. Ces rayons lumineux axiaux 4 assurent une première fonction de signalisation, c'est-à-dire qu'ils forment, sur la face de sortie 7 du guide optique G, un point lumineux d'intensité élevée, appelé point chaud.

D'autres rayons du faisceau lumineux sont totalement réfléchis vers les extrémités e2 du guide G : ce sont les rayons latéraux 5. Le principe de la réflexion totale est un phénomène optique qui permet la transmission de la lumière dans un guide optique. Lorsqu'un rayon lumineux passe d'un milieu à un autre milieu possédant un indice de réfraction différent, sa direction est changée ; c'est l'effet de la réfraction. Pour un certain angle d'incidence, et si l'indice du milieu initial est supérieur à celui du milieu final, le rayon lumineux n'est plus réfracté, il est réfléchi totalement : on parle de réflexion totale.

Plus précisément, certains rayons sont réfléchis dans la partie G1 du guide optique, d'autres rayons sont réfléchis dans la partie G2 dudit guide. Il est bien entendu que le moteur de lumière 2 peut aussi être placé à l'extrémité d'une seule partie du guide optique. Dans ce cas, le faisceau lumineux comporte des rayons propagés axialement et des rayons réfléchis vers un seul coté du guide optique.

Sur la figure 1, on a représenté en détail, selon une vue en coupe, les rayons lumineux dans la partie G1 du guide. La partie G2 du guide optique est montrée selon une vue en perspective.

Le guide optique G comporte deux faces :
- une première face 7, lisse, formant la face de sortie du guide optique,
- une deuxième face 8, opposée à la face de sortie 7, formant la face de diffusion du guide optique. Cette face 8 assure la diffusion des rayons lumineux vers la face de sortie 7.

Cette face de diffusion 8 comporte une gorge 9. Cette gorge 9 est un évidement transversal, ou rainure, formant un canal dans l'épaisseur du guide optique G. Cette gorge 9 a pour rôle de renvoyer la lumière vers la face de sortie 7, notamment de manière diffuse, c'est-à-dire sous la forme d'un cône lumineux. En effet, les rayons lumineux entrant en contact avec le fond de la gorge 9 sont réfléchis de manière diffuse, en fonction de leur angle d'incidence, vers la face de sortie 7.

Pour améliorer la réfraction par la gorge 9, celle-ci comporte, selon un mode de réalisation préféré de l'invention, une zone diffusante située sur le fond 6 de la gorge 9. Comme expliqué plus en détail par la suite, cette zone diffusante comporte des micro diffusions qui, en fonction de leur forme, permettent de diffuser le faisceau lumineux avec des motifs différents en sortie du guide optique G.

Comme expliqué précédemment, les rayons lumineux émis par le moteur de lumière 2 peuvent traverser axialement le guide optique pour former un point chaud sur la face de sortie 7 ou bien être réfléchis latéralement dans le guide optique G. Cette réflexion latérale est obtenue, selon l'invention, au moyen d'au moins un orifice.

Dans le mode de réalisation de la figure 1, la répartition axiale et/ou latérale est obtenue au moyen d'un seul orifice 10. Cet orifice 10 est réalisé dans la zone centrale du guide G, c'est-à-dire à la jonction de parties G1 et G2 du guide optique G. Cet orifice 10 n'est décrit que pour la partie G1 du guide, étant entendu qu'il est symétrique, par rapport à l'axe X, dans la partie G2.

Cet orifice 10 est une ouverture traversante réalisée dans la largeur du guide optique. Il est réalisé, de préférence, dans la zone centrale 11 du guide, en regard du moteur de lumière 2. Cet orifice 10, de forme asymétrique, crée des zones planes et des zones inclinées, dans la zone centrale 11. Cette différence de niveaux dans la zone centrale 11 permet de répartir le faisceau lumineux selon la direction principale d'émission X et selon des directions latérales. Les directions dites latérales sont des directions non axiales, c'est-à-dire des directions formant un angle non nul avec l'axe X. Une direction latérale peut être, par exemple, la direction selon l'axe Y du guide G, perpendiculaire à l'axe X. Il est à noter que le fait que les axes X et Y soient selon cet exemple perpendiculaires n'est pas une nécessité de l'invention : le moteur de lumière peut être aussi associé au guide de lumière de façon à ce que leurs axes respectifs ne soient pas exactement perpendiculaires. On comprend par axe, (notamment en ce qui concerne le guide de lumière qui peut être courbe selon sa longueur), éventuellement l'axe longitudinal passant par la tangente à l'élément quand celui-ci n'est pas substantiellement rectiligne.

Ainsi, lorsque le moteur de lumière 2 émet un faisceau lumineux, celui-ci se propage dans le guide optique G. Certains des rayons de ce faisceau lumineux (les rayons référencés 4) sont propagés selon une direction axiale X par le guide optique G. Ces rayons axiaux 4 sont propagés directement par les zones planes 10a de l'orifice 10, vers la face de sortie 7, sans subir de déviation et/ou de réflexion. Autrement dit, une partie des rayons lumineux 4 est directement distribuée vers la face de sortie 7 du guide optique.

Une autre partie des rayons lumineux 5 est déviée par les zones inclinées 10b de l'orifice 10. En fonction de l'angle d'incidence des rayons lumineux avec les zones inclinées 10b, les rayons latéraux 5, réfléchis par les zones inclinées, peuvent avoir des trajectoires différentes dans le guide optique :
- ces rayons 5 peuvent être envoyés, par réflexion totale, vers la face de diffusion 8 puis diffusés, par cette face 8, vers la face de sortie 7 du guide optique. Cette diffusion est assurée par la gorge 9 elle-même et par la zone diffusante de ladite gorge ;
- ces rayons lumineux 5 peuvent subir une ou plusieurs réflexions internes (réfractions par la face de sortie 7 et par la gorge 9) avant d'être renvoyés, vers la face de sortie 7, par diffusion par le fond de gorge.

La trajectoire de ces rayons latéraux 5 dépend notamment de la forme et des dimensions de l'orifice 10. En modifiant cette forme et/ou ces dimensions, il est possible de modifier la répartition de la lumière vers la direction principale d'émission X et vers les directions latérales.

Les rayons lumineux latéraux 5 assurent, dans le dispositif de l'invention, une deuxième fonction de signalisation, c'est-à-dire une fonction de signalisation linéaire. Cette seconde fonction consiste en un éclairage de moindre intensité que la première fonction mais sur une plus grande longueur. Cette fonction de signalisation de grande longueur permet un effet de surlignage ou de jonction lumineuse de deux points chauds. L'éclairage de grande longueur peut aussi être réalisé en utilisant 100% du flux latéralement.

La figure 2 représente un deuxième mode de réalisation

La figure 2 représente un deuxième mode de réalisation du dispositif de l'invention. Comme pour la figure 1, on a représenté, sur cette figure 2, la première partie G1 du guide optique G selon une vue en coupe et la seconde partie G2 du guide selon une vue en perspective.

Dans ce mode de réalisation, la répartition axiale et/ou latérale des rayons lumineux 4 et 5 est obtenue au moyen de deux orifices 12 et 13 réalisés dans la largeur du guide optique. Ces deux orifices 12 et 13 sont non débouchants, c'est-à-dire qu'ils forment chacun une cavité, ou creux, non traversante. Ils sont réalisés, de préférence, dans la zone centrale 11 du guide optique G, c'est-à-dire à la jonction des parties G1 et G2 dudit guide. Ces orifices 12 et 13 sont situés en regard du moteur de lumière 2. Ils créent dans les guides G1 et G2 différents niveaux de cavités, avec des zones planes et des zones inclinées, ce qui permet de répartir le faisceau lumineux selon la direction principale X et selon des directions latérales.

Comme dans le mode de réalisation de la figure 1, lorsque le moteur de lumière 2 émet un faisceau lumineux, celui-ci se propage dans le guide optique G. Certains des rayons de ce faisceau lumineux (les rayons référencés 4) sont propagés selon une direction axiale X par le guide optique G. Ces rayons axiaux 4 sont propagés directement par les zones non creuses, vers la face de sortie 7, sans subir de déviation et/ou de réflexion. Autrement dit, une partie des rayons lumineux 4 est directement distribuée vers la face de sortie 7 du guide optique assurant ainsi un éclairage d'intensité élevée formant un point chaud.

Une autre partie des rayons lumineux latéraux 5 est déviée par orifices 12 et 13. En effet, les orifices 12 et 13 permettent de retenir les rayons lumineux émis par le moteur de lumière 2. Ces rayons ainsi retenus sont envoyés par réfraction dans le guide optique G. En fonction de la profondeur des orifices 12 et 13, les rayons latéraux 5 peuvent avoir des trajectoires différentes dans le guide optique :
- une partie de ces rayons latéraux 5 est envoyée par réflexion vers la face de diffusion 8 et, plus précisément, par la gorge 9 de la face 8 qui assure alors la diffusion de ces rayons vers la face de sortie 7. Cette diffusion peut encore être améliorée par la présence d'une zone diffusante située sur le fond 6 de la gorge 9.
- une autre partie des rayons latéraux 5 subit des multi réflexions internes dans le guide, c'est-à-dire que ces rayons 5 sont réfléchis au moins une fois vers la face de sortie 7 puis vers la face de diffusion 8 avant d'être finalement diffusés vers la face de sortie 7 du guide optique. Dans ce mode de réalisation, le coefficient de réflexion est proche de 1, ce qui a pour effet qu'il n'y a pas, ou quasiment pas, de perte d'énergie lumineuse au cours de ces multi-réflexions.

La trajectoire de ces rayons latéraux 5 dépend notamment de la forme et de la profondeur des orifices 12 et 13. En modifiant cette forme et/ou ces profondeurs, il est possible de modifier la répartition de la lumière vers la direction principale d'émission X et vers les directions latérales.

Ainsi, quel que soit le mode de réalisation (celui de la figure 1 ou celui de la figure 2), la lumière est répartie dans le guide optique axialement et latéralement. Elle est répartie latéralement dans la partie G1 du guide optique et dans la partie G2 dudit guide optique. En outre, les réflexions internes multiples permettent de propager la lumière jusqu'aux extrémités e2 du guide optique G. Le guide optique peut, ainsi, être relativement long, par exemple de l'ordre de 1300 mm.

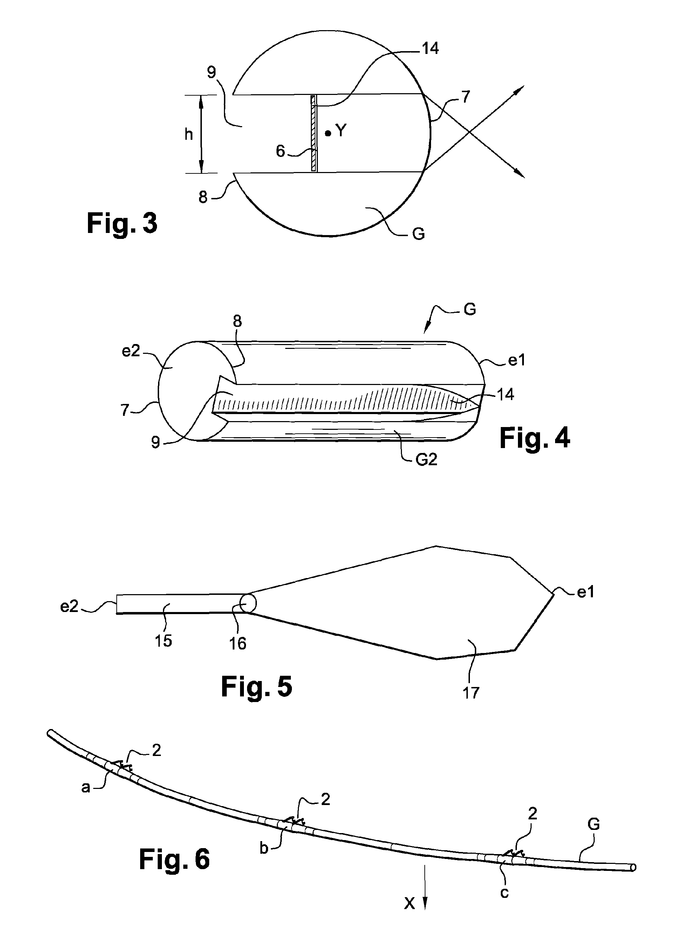

La figure 3 représente une section du guide optique G des figures 1 et 2. En effet, quel que soit le mode de réalisation choisi (un orifice débouchant ou deux orifices non débouchants) la section du guide optique est la même. On voit donc, sur la figure 3, que le guide optique G a une section globalement circulaire. Il est à noter toutefois que cette section peut avoir une forme différente de circulaire, par exemple rectangulaire. Dans les modes de réalisation décrits, la section est globalement circulaire avec un diamètre de l'ordre de 8 à 12 mm.

Cette figure 3 montre la face de sortie 7 du guide optique G ainsi que la face de diffusion 8 avec sa gorge 9. Cette gorge 9 à une forme creuse, par exemple en forme de U, la base du U étant le fond 6 de la gorge 9. Le fond 6 de ladite gorge est, de préférence, proche du centre du guide optique, c'est-à-dire situé près de l'axe de symétrie du guide optique.

Cette gorge 9 a pour effet principal de diffuser la lumière vers la face opposée, c'est-à-dire la face de sortie 7 du guide optique. Pour améliorer l'effet de diffusion de la gorge, celle-ci peut comporter une zone diffusante 14. Cette zone diffusante 14 comporte des moyens de diffusion qui permettent de diffuser efficacement la lumière vers la face de sortie 7 du guide optique G. Ces moyens de diffusions peuvent être des micro-diffusions dont le diamètre est de l'ordre du dixième de millimètre.

Ces micro-diffusions peuvent avoir des motifs différents, par exemple :
- des stries rectilignes ou courbes
- des micro-prismes à section triangulaire
- des microfresnels,
- des micro-motifs optiques, c'est-à-dire des trous de forme spécifique, réalisés dans la matière pour améliorer l'aspect homogène du guide optique.
- des rugosités ou des dépolis.

Ces différents motifs de diffusion donnent au guide optique un aspect visuel différent.

La zone diffusante 14 forme une bande diffusante sur le fond 6 de la gorge 9. Cette bande diffusante 14 a une largeur h qui, de préférence, est identique à la largeur du fond de la gorge 9. La largeur h de la bande diffusante 14 peut être constante. Elle peut aussi être évolutive de manière à élargir le champ de luminance apparente pour un observateur.

Sur la figure 4, on a représenté, selon une vue en perspective, un exemple de gorge à forme évolutive. Dans cet exemple, la forme de la gorge 9 évolue entre une extrémité e1 et une extrémité e2 de la partie G2 du guide optique G. On dit que la gorge subit un « morphing », c'est-à-dire une déformation progressive de sa forme. Dans cet exemple, l'extrémité e1, proche du moteur de lumière, a une forme de gorge 9 différente de celle de l'extrémité e2. L'évolution de la forme de la gorge est une transformation lente d'une rainure à petite section cylindrique en une gorge en forme de U. Ceci n'est bien sûr qu'un exemple. Toutes sortes d'évolutions peuvent être envisagées, avec agrandissement de la section de la gorge ou bien diminution de cette section ou encore alternance d'agrandissement et de diminution, le tout avec changement de forme de la section.

Le fait de choisir un guide optique cylindrique à section transversale circulaire permet d'obtenir, visuellement, un agrandissement de la zone diffusante 14 par un effet de loupe classique. Ainsi, l'aspect visuel extérieur du motif de diffusion est amplifié par cet effet loupe.

La figure 5 représente un exemple d'une évolution lumineuse dans un guide optique. Cette figure 5 montre un exemple de l'aspect visuel d'un guide optique lorsque la gorge a une forme évolutive. Dans cet exemple, l'évolution correspond à un agrandissement depuis une section pseudo circulaire 15, de l'extrémité e2 à une zone centrale 16, jusqu'à une zone totalement plane 17. Autrement dit, par une évolution douce, la section pseudo circulaire 15 se transforme en une section surfacique 17. Pour cela, la forme en U de la gorge 9 a été étirée pour former une large surface diffusante. Cette section surfacique 17 comporte la zone diffusante 14 de la gorge 9. La zone diffusante 14 étant relativement étroite, elle s'étale sur tout l'arrière de la section surfacique 17. Ainsi, la surface diffusante apparaît beaucoup plus grande pour un observateur extérieur, par un effet trompe l'oeil. Cet effet trompe l'oeil est obtenu lorsque la zone diffusante 14 est proche du centre de la gorge 9.

Un exemple d'un dispositif de signalisation selon l'invention est illustré en figure 6. Dans cet exemple, plusieurs moteurs de lumière 2 sont placés le long d'un même guide optique G pour former une ligne lumineuse. En réunissant ainsi plusieurs moteurs de lumière le long d'un même guide optique, ou de plusieurs guides optiques réunis, on peut réaliser des zones optiques de forte intensité lumineuse alternées avec des zones moins lumineuses et de grandes longueurs.

On comprend, d'après la description précédente, que le dispositif de la figure 6 comporte plusieurs points chauds, plus précisément autant de points chauds que de moteurs de lumière. La figure 6 montre trois moteurs de lumière 2 correspondants à trois points chauds a, b, c. Ces points chauds a, b, c assurent la première fonction de signalisation. Les points chauds sont reliés entre eux par un ou plusieurs guides optiques assurant la fonction de signalisation de grande longueur.

Cette fonction de signalisation de grande longueur permet de générer des effets de style, par exemple, en soulignant les formes d'un véhicule. Le dispositif de l'invention permet, par exemple, de suivre le tour de la lunette arrière ou bien une partie de la carrosserie. Il peut aussi être utilisé pour faire des éclairages de bords de porte intérieurs ou des feux stop surélevés.

Outre les avantages donnés précédemment (notamment diffusion axiale et latérale), le dispositif de l'invention présente des avantages du point de vue de la fabrication. La fabrication de ce dispositif, et en particulier du guide optique utilisé dans ce dispositif, peut être réalisée par injection d'une matière transparente dans un moule. Elle peut être monobloc, c'est-à-dire que le guide optique est réalisé d'une seule et même pièce, un logement étant prévu au centre dudit guide pour le moteur de lumière. Le guide optique peut aussi être réalisé en plusieurs pièces réunies par des zones de liaisons contenant le logement pour le moteur de lumière. Ces zones de liaisons sont polies afin de minimiser les pertes de flux lumineux.

Quel que soit le mode de fabrication du guide optique, la gorge est réalisée, dans l'épaisseur dudit guide, lors de l'injection de la matière dans le moule. La présence de cette gorge permet de réduire notablement la quantité de matière et donc le temps de refroidissement nécessaire. La gorge, tout comme les orifices, se comporte comme une source de refroidissement dans le moule, permettant ainsi d'évacuer la chaleur.

Les orifices peuvent aussi être réalisés lors de l'injection de la matière dans le moule grâce à la présence de pièces dont la forme correspond à la forme souhaitée des orifices. Ces pièces peuvent être réglables, ce qui permet de modifier la profondeur des orifices (dans le deuxième mode de réalisation) qui peuvent ainsi être dissymétriques.

La gorge est réalisée au moyen d'une lame montée dans le moule. Cette lame est polie de chaque côté permettant ainsi de démouler facilement le guide, après refroidissement. Cette lame peut comporter aussi, sur sa tranche intérieure, des rugosités qui formeront sur le fond de la gorge les motifs des micro-diffusions. Ces rugosités peuvent avoir des dimensions de l'ordre de 2 à 3 dixièmes de millimètres. Ces rugosités ont des formes complémentaires des motifs de micro-diffusion souhaités.

Dans le cas où les micro-diffusions sont des micro-motifs optiques, ceux-ci peuvent aussi être obtenus, après refroidissement du guide optique, par attaque laser du fond de la gorge.

Outre l'application à des feux de signalisation, les applications dans le domaine de l'éclairage intérieur sont également très variées : le but peut être de créer un éclairage d'ambiance, un effet de type surlignage de fonctions, en éclairant un conduit sur une grande longueur. On peut aussi réaliser des guides optiques selon l'invention, où la partie médiane du guide offre un éclairage de type spot de lecture, et où les parties latérales offrent un éclairage de type éclairage d'ambiance.

## Revendications

1. Dispositif d'éclairage et/ou de signalisation, pour véhicule automobile, comportant
- au moins un moteur de lumière (2), comprenant au moins une diode électroluminescente (3) émettant un faisceau lumineux en direction du moteur, notamment selon l'axe (X) dudit moteur et
- au moins un guide optique (G), dont une extrémité (e1) est éclairée par la ou au moins une des diode(s) électroluminescente(s), ce guide optique étant apte à émettre de la lumière, notamment sur tout ou partie de sa longueur,
- le guide optique comportant au moins un orifice non traversant (12, 13) réalisé dans l'épaisseur dudit guide optique et situé en regard du moteur de lumière (2), et déviant le faisceau lumineux par une réflexion latérale de celui-ci,
**caractérisé en ce que** le guide optique comporte une gorge (9) réalisée dans l'épaisseur dudit guide optique, suivant la longueur du guide.

2. Dispositif selon la revendication 1, **caractérisé en ce que** le guide optique (G) comporte deux faces :
- une première face (7) lisse formant la face de sortie du guide optique et
- une deuxième face (8), opposée à la face de sortie, formant la face de diffusion du guide optique,
ladite face de diffusion comportant ladite gorge (9), ladite gorge étant un évidement transversal, ou rainure, formant un canal dans l'épaisseur du guide optique, ayant pour rôle de renvoyer la lumière vers la face de sortie.

3. Dispositif selon l'une des revendications 1 à 2, **caractérisé en ce que** la gorge (9) comporte une zone diffusante (14) située sur un fond (6) de la gorge.

4. Dispositif selon la revendication 3, **caractérisé en ce que** la zone diffusante est munie de micro-diffusions, dont les dimensions sont de préférence de l'ordre du dixième de millimètre.

5. Dispositif selon la revendication 4, **caractérisé en ce que** les micro-diffusions comportent des micro-prismes, des rugosités, des micro-fresnel, des dépolis, etc.

6. Dispositif selon l'une quelconque des revendications 1 à 5, **caractérisé en ce que** la gorge (9) a une forme évolutive.

7. Dispositif selon l'une des revendications 1 à 6, **caractérisé en ce que** le guide optique (G) assure une répartition des rayons lumineux axialement et latéralement, ou seulement latéralement.

8. Dispositif selon l'une quelconque des revendications précédentes, **caractérisé en ce que** le moteur de lumière est placé dans une position centrale entre au moins deux parties (G1, G2) du guide optique.

9. Dispositif selon les revendications 7 et 8, **caractérisé en ce que** le guide optique (G) comporte une première partie de guide (G1) et une seconde partie de guide (G2), chaque partie de guide (G1, G2) ayant une première extrémité (e1) commune aux deux parties, et une seconde extrémité (e2), opposée à l'extrémité e1, le guide optique G recevant le faisceau lumineux émis par le moteur de lumière (2) au voisinage de la première extrémité (e1) et **en ce que** le guide optique assure une répartition des rayons lumineux latéralement dans la première partie (G1) du guide optique et dans la seconde partie (G2) dudit guide optique, la lumière se propageant par des réflexions internes multiples jusqu'aux secondes extrémités (e2) du guide optique (G).

10. Dispositif selon l'une des revendications précédentes, **caractérisé en ce que** le guide optique (G) est un élément plein allongé ayant une section cylindrique, de matière transparente qui assure la propagation du faisceau lumineux émis par le moteur de lumière (2) depuis une extrémité proche du moteur de lumière jusqu'à une extrémité opposée.

11. Dispositif selon la revendication précédente, dans lequel le guide optique (G) a la forme d'un cercle ou d'un arc de cercle.

12. Dispositif selon l'une des revendications précédentes **caractérisé en ce qu'**il s'agit d'un feu de signalisation de véhicule ou d'un dispositif d'éclairage intérieur de véhicule.

13. Véhicule automobile, **caractérisé en ce qu'**il est équipé d'au moins un dispositif d'éclairage et/ou de signalisation selon l'une quelconque des revendications précédentes.
